# EUROPÄISCHE PATENTANMELDUNG

(11) **EP 0 825 750 A2**
(43) Veröffentlichungstag der Anmeldung: **25.02.1998**
(21) Anmeldenummer: 97440067.3
(22) Anmeldetag: 14.08.1997
(51) Int. Cl.: H04M 1/66

(54) **Tragbare Signalisierungsvorrichtung**

(30) Priorität: 16.08.1996 DE 19633014
(71) Anmelder: ALCATEL ALSTHOM COMPAGNIE GENERALE D'ELECTRICITE, 75008 Paris (FR)
(72) Erfinder: Horrer, Matthias, Germantown, MD 20874 (US)
(74) Vertreter: Brose, Gerhard, Dipl.-Ing.

(57) **Zusammenfassung**

Für einen Zugang zu einem Kommunikationsdienst für eine personalisierte Kommunikation wird eine tragbare Signalisierungsvorrichtung (SV) vorgeschlagen, die ein Anschlußmittel (AM, S1, S2) aufweist, mit dem die Signalisierungsvorrichtung (SV) in eine drahtgebundene Verbindung zwischen einem Telefon (TH, TB) und einem Anschluß (TAE) für ein Telekommunikationsnetz geschaltet werden kann.

## Beschreibung

Die vorliegende Erfindung betrifft eine tragbare Signalisierungsvorrichtung für ein Telekommunikationsnetz, mit der ein Zugang zu einem Kommunikationsdienst für eine personalisierte Kommunikation ermöglicht wird.

Aus dem Artikel "Mobilfunk in Europa auf neuen Wegen" von J. F. Huber, telekom report 14, Heft 4, 1991, Seiten 210-213 ist bekannt, daß bei einer personalisierten Kommunikation jeder Benutzer unabhängig von seinem Aufenthaltsort mit einer einzigen Teilnehmernummer über alle Kommunikationsaktivitäten verfügen kann. Beispiele für Telekommunikationsnetze, die eine personalisierte Kommunikation ermöglichen, sind das Telekommunkationsnetz nach dem GSM (global systems for mobile communications) 900-Standard und das Telekommunikationsnetz nach dem DCS (digital personal communication system) 1800-Standard. Bei diesen sogenannten Mobilfunknetzen wird die personalisierte Kommunikation dadurch gewährleistet, daß der Teilnehmer eine Karte mit darauf abgespeicherten teilnehmerspezifischen Informationen in ein Kommunikationsendgerät schiebt, um dieses zu aktivieren. Dabei gewährleistet die Karte den geregelten und authorisierten Zugriff auf die Netzdienste und ermöglicht die Entgegennahme von Anrufen, auch wenn der Teilnehmer nicht sein eigenes Kommunikationsendgerät verwendet.

Personenbezogene Dienste für die personalisierte Kommunikation sind beispielsweise die Berechtigungsprüfung, die Aufenthaltsverwaltung, die Anrufsteuerung und die Gebührenerfassung und -verrechnung.

Ein weiteres Beispiel zur Ermöglichung einer personalisierten Kommunikation ist ein Kommunikationsdienst wie der UPT (universal personal telecommunication)-Dienst. Der UPT-Dienst wird durch ein intelligentes Netz gesteuert und basiert im wesentlichen auf der ständigen Aktualisierung von Datenbanken, in denen der augenblickliche Aufenthaltsort eines UPT-Teilnehmers gespeichert ist. Für den Zugang des Teilnehmers zu dem Kommunikationsdienst UPT ist ein Zugangsgerät erforderlich, mit dem sich der UPT-Teilnehmer identifizieren und authentifizieren kann. Dazu benutzt man bekannterweise eine Signalisierungsvorrichtung, wie z.B. einen DTMF (dual tone multi frequency)-Sender, der persönliche Kennummern in Form akustischer Signale erzeugt und als eigenes Gerät realisiert ist. Die bekannte Signalisierungsvorrichtung weist einen Lautsprecher auf, der bei der Benutzung über ein Mikrofon eines Teilnehmerendgerätes des Telekommunikationsnetzes gehalten wird. Mittels eines Tastendrucks auf eine Taste der Signalisierungsvorrichtung erfolgt die Identifikations-und Authentifikationsprozedur über die Aussendung der persönlichen Kennummern in Form akustischer Mehrfrequenzsignale. Die von der Signalisierungsvorrichtung erzeugten akustischen Mehrfrequenzsignale werden dabei von dem Lautsprecher der Signalisierungsvorrichtung in das Mikrofon des Teilnehmerendgerätes übertragen. Diese Handhabung der bekannten Signalisierungsvorrichtung mit der Koppelung des Lautsprechers der Signalisierungsvorrichtung und des Mikrofons des Teilnehmerendgerätes bei gleichzeitiger Bedienung einer Taste ist sehr umständlich, wodurch die Übertragung der akustischen Mehrfrequenzsignale sehr leicht fehlerhaft sein kann.

Es ist die Aufgabe der vorliegenden Erfindung, eine Signalisierungsvorrichtung zu schaffen, mit der ein einfacher und sicherer Zugang zu einem Kommunikationsdienst für eine personalisierte Kommunikation erreicht werden kann.

Diese Aufgabe wird durch die technische Lehre des Anspruchs 1 gelöst.

In einer vorteilhaften Ausgestaltung der Erfindung weist die Signalisierungsvorrichtung ein Kartenlesemittel zum Lesen einer auf einer Karte abgespeicherten teilnehmerspezifischen Information auf. Dadurch wird die Flexibilität für den Gebrauch der Signalisierungsvorrichtung und die Sicherheit gegen einen Mißbrauch der Signalisierungsvorrichtung erhöht.

Weitere vorteilhafte Ausgestaltungen der Erfindung sind den abhängigen Patentansprüchen zu entnehmen.

Im folgenden werden die Erfindung und ihre Vorteile an Hand von Ausführungsbeispielen und den Zeichnungen verdeutlicht. Es zeigen:
- Figur 1: ein Ausführungsbeispiel einer erfindungsgemäßen Signalisierungsvorrichtung,
- Figur 2: ein erstes Beispiel eines Anschlusses der erfindungsgemäßen Signalisierungsvorschrift zwischen einem Telefonhörer und einem zugehörigen Basisteil eines Telefones und
- Figur 3: ein zweites Beispiel eines Anschlusses der erfindungsgemäßen Signalisierungsvorschrift zwischen das Basisteil eines Telefones und einen Netzanschluß.

Im folgenden werden gleiche oder gleichwirkende Elemente durchweg mit gleichen Bezugszeichen bezeichnet.

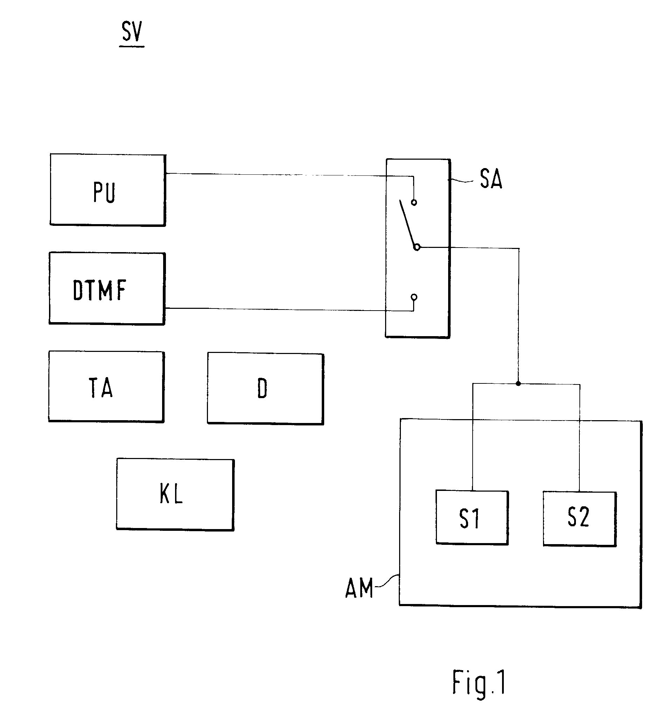

Figur 1 zeigt ein Ausführungsbeispiel einer erfindungsgemäßen Signalisierungsvorrichtung SV. Mittels dieser Signalisierungsvorrichtung SV ist es einem Benutzer möglich, Zugang zu einem Kommunikationsdienst für eine personalisierte Kommunikation zu erhalten. Ein solcher Kommunikationsdienst ist in den folgenden Ausführungsbeispielen der sogenannte UPT (universal personal telecommunication)-Dienst. Der Kommunikationsdienst für die personalisierte Kommunikation kann allerdings ebenfalls ein anderer Dienst sein. Der UPT-Dienst sieht eine Zuordnung von persönlicher Teilnehmernummer zu Teilnehmer vor.

Für die Ermöglichung des Zugangs zu dem UPT- Dienst weist die erfindungsgemäße Signalisierungsvorrichtung SV ein erstes Zugangsmittel DTMF auf. Dieses erste Zugangsmittel ist ein DTMF-Sender/Empfänger zur Erzeugung von mehrfrequenten Signalen für die Signalisierung. Die Signalisierungsvorrichtung SV des vorliegenden Ausführungsbeispiels weist vorteilhafterweise neben dem ersten Zugangsmittel DTMF ein zweites Zugangsmittel PU auf. Dieses zweite Zugangsmittel PU ist ein ISDN (integrated services digital network)-Protokollumsetzer für ein Senden und/oder Empfangen einer Zeichengabe nach dem ISDN-Standard. Es ist auch möglich, die Signalisierungsvorrichtung so auszugestalten, daß sie ausschließlich das zweite Zugangsmittel PU aufweist. Alternativ oder zusätzlich zu dem ersten und/oder dem zweiten Zugangsmittel DTMF und PU kann ein anderes Zugangsmittel für eine Signalisierung mittels Impulsen vorhanden sein.

Die Signalisierungsvorrichtung SV weist des weiteren ein Anschlußmittel AM auf, das im vorliegenden Ausführungsbeispiel aus einer ersten Steckvorrichtung S1 und einer zweiten Steckvorrichtung S2 besteht. Mittels des Anschlußmittels AM kann die Signalisierungsvorrichtung SM an ein Telekommunikationsnetz und/oder an ein Telefon angeschlossen werden. Über das Anschlußmittel AM werden Signalisierungssignale in das Telekommunikationsnetz herausgegeben und aus dem Telekommunikationsnetz kommende Signalisierungssignale empfangen.

Das Anschlußmittel AM wird mit den Zugangsmitteln verbunden. Im vorliegenden Ausführungsbeispiel wird das Anschlußmittel AM über einen Schalter SA mit dem ersten und dem zweiten Zugangsmittel DTMF bzw. PU verbunden. Mittels des Schalters SA wird entweder das erste Zugangsmittel DTMF oder das zweite Zugangsmittel PU mit dem Telekommunikationsnetz verbunden. Wird die Signalisierungsvorrichtung SV an ein Telekommunikationsnetz nach dem ISDN-Standard angeschlossen, so kann der Schalter SA so eingestellt werden, daß das zweite Zugangsmittel PU für die Zeichengabe nach dem ISDN-Standard mit dem Anschlußmittel AM verbunden ist. In den anderen Fällen wird der Schalter SA so eingestellt, daß das erste Zugangsmittel DTMF für die Erzeugung der mehrfrequenten Signalisierungssignale mit dem Anschlußmittel AM verbunden ist. Es ist auch möglich, bei einem Anschluß der Signalisierungsvorrichtung SV an ein Telekommunikationsnetz nach dem ISDN-Standard, das erste Zugangsmittel DTMF mit dem Anschlußmittel AM zu verbinden. Neben der vorteilhaften Ausgestaltung der Signalisierungsvorrichtung SV mit dem Schalter SA ist es ebenfalls möglich, sowohl das erste als auch das zweite Zugangsmittel DTMF und PU gleichzeitig mit dem Anschlußmittel AM zu verbinden. In Abhängigkeit von der jeweiligen, von der Signalisierungsvorrichtung SV empfangenen Signalisierungsart, DTMF-Signal oder Zeichengabe nach dem ISDN-Standard, werden diese verschiedenen Signalisierungsarten von dem jeweiligen Zugangsmittel DTMF oder PU verarbeitet. Die Ausgestaltung der Signalisierungsvorrichtung SV ist nicht auf die hier beschriebenen Kombinationen der Zugangsmittel beschränkt. Vielmehr sind vielfältige Varianten bei der Ausgestaltung der Signalisierungsvorrichtung SV mit Zugangsmitteln denkbar.

Die erfindungsgemäße Signalisierungsvorrichtung gemäß der Figur 1 weist des weiteren eine Tastatur TA, ein Anzeigemittel D in Form eines Displays und einen Kartenleser KL auf. Der Kartenleser KL wird zum Lesen von auf einer Karte abgespeicherten teilnehmerspezifischen Information verwendet. Eine solche Karte kann beispielsweise eine SIM (subscriber identity modul)-Karte sein. Eine solche SIM-Karte kann in den Kartenleser KL hineingeschoben werden und dieser liest daraufhin die auf der SIM-Karte abgespeicherten Informationen.

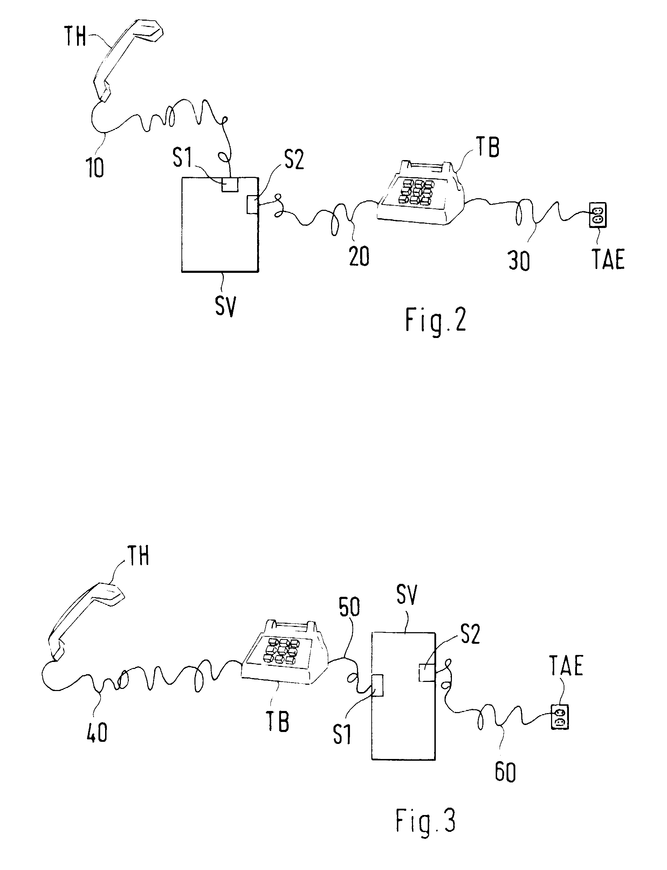

Die Figuren 2 und 3 zeigen zwei Beispiele, wie die Signalisierungsvorrichtung SV in eine drahtgebundenen Verbindung zwischen einem Telefon und einem Telekommunikationsnetz geschaltet werden kann. Das Telefon weist dabei einen Telefonhörer TH und ein Basisteil TB auf. Es wird davon ausgegangen, daß der Telefonhörer, das zugehörige Basisteil und ein Telekommunikationsnetzanschluß über Kabel mittels Steckverbindungen miteinander verbunden sind. Die Kabel weisen dazu an beiden Enden Stecker auf. Es ist daher besonders einfach, die Signalisierungsvorrichtung in eine drahtgebundene Verbindung zwischen dem Telefon und dem Anschluß für das Telekommunikationsnetz einzubringen.

Die Figur 2 zeigt ein erstes Beispiel eines Anschlusses der Signalisierungsvorrichtung SV in die drahtgebundene Verbindung zwischen dem Telefonhörer und dem Basisteil eines Telefons. Dazu wurde die Steckverbindung zwischen dem Telefonhörer und dem Basisteil gelöst und die Signalisierungsvorrichtung dazwischen geschaltet. Die Figur 2 zeigt einen Telefonhörer TH, der über ein Kabel 10 mit dem ersten Stecker S1 der Signalisierungsvorrichtung verbunden ist. Ein Basisteil TB eines Telefones ist über ein Kabel 20 mit dem zweiten Stecker S2 der Signalisierungsvorrichtung SV verbunden. Ein Anschluß TAE für ein Telekommunikationsnetz ist über ein Kabel 30 mit dem Basisteil des Telefones TB verbunden. Der Schalter SA der Signalisierungsvorrichtung SV ist dabei so eingestellt, daß das erste Zugangsmittel DTMF mit dem Anschlußmittel AM, d.h. dem ersten und zweiten Stecker S1 und S2, verbunden ist. Die Verbindung zwischen dem Telefonhörer TH und dem Basisteil TB des Telefones ist für den Anschluß der Signalisierungsvorrichtung geeignet, da eine schnelle und leichte Einbaumöglichkeit besteht. Der Stecker zum Anschluß des Telefonhörers TH in das Basisteil TB ist im allgemeinen bei üblichen Telefonen gut zugänglich.

Der Anschluß der Signalisierungsvorrichtung SV zwischen die Verbindung Telefonhörer TH und Basisteil TB ist möglich, da eine vom Netz kommende DTMF-Signalisierung vom Basisteil TB an den Telefonhörer TH weiter geleitet wird, so daß die Signalisierungsvorrichtung SV auf dem Übertragungsweg der DTMF-Signalisierungssignale liegt, und die DTMF-Signalisierungssignale empfangen kann. Dies ist bei der Verwendung der Signalisierungsvorrichtung SV mit dem zweiten Zugangsmittel PU und einem Anschluß an ein ISDN-Telekommunikationsnetz mit der zugehörigen Zeichengabe nicht möglich, da diese Zeichengabe nicht von dem Basisteil TB zu dem Telefonhörer TH weiter geleitet wird.

Figur 3 zeigt das zweite Beispiel des Anschlusses der Signalisierungsvorrichtung SV in eine drahtgebundene Verbindung zwischen dem Telefon und dem Telekommunikationsnetz. Die Figur 3 zeigt den Telefonhörer TH, der über ein Kabel 40 mit dem Basisteil TB des Telefones verbunden ist. Das Basisteil TB ist über ein Kabel 50 mit dem ersten Stecker S1 der Signalisierungsvorrichtung SV verbunden. Der Anschluß TAE für das Telekommunikationsnetz ist über ein Kabel 60 mit dem zweiten Stecker S2 der Signalisierungsvorrichtung SV verbunden. Ein Benutzer, der die Signalisierungsvorrichtung in die drahtgebundene Verbindung zwischen dem Basisteil TB des Telefones und dem Anschluß TAE für das Telekommunikationsnetz gemäß der Figur 3 anschließen möchte, löst dazu die ursprünglich vorhandene Steckverbindung zwischen dem Basisteil TB und dem Anschluß TAE und bringt die Signalisierungsvorrichtung, wie oben beschrieben, in die drahtgebundene Verbindung zwischen dem Telefon und dem Telekommunikationsnetz ein. Ist der Anschluß TAE ein Anschluß für das ISDN-Telekommunikationsnetz, so wird der Schalter SA der Signalisierungsvorrichtung SV entsprechend eingestellt. Das zweite Zugangsmittel PU ist dann mit dem Anschlußmittel AM verbunden. Möchte der Benutzer die DTMF-Funktionalität nutzen, so wird der Schalter SA entsprechend eingestellt, so daß das erste Zugangsmittel DTMF mit dem Anschlußmittel AM verbunden ist.

Da die Signalisierungsvorrichtung SV im vorliegenden Ausführungsbeispiel mit dem Kartenleser KL ausgestattet ist, um dadurch die Flexibilität und die Sicherheit für die Benutzung zu erhöhen, steckt der Benutzer zur Aktivierung des Vorgangs zur Ermöglichung des Zugangs zu dem UPT-Dienst seine SIM-Karte in den Kartenleser KL hinein. Die Signalisierungsvorrichtung SV prüft die SIM-Karte und liest die Identitätsinformationen des Benutzers. Anschließend verlangt die Signalisierungsvorrichtung SV vorteilhafterweise eine benutzerspezifische Nummer in Form einer PIN (personal identification number). Die PIN kann entweder direkt von der Signalisierungsvorrichtung SV geprüft werden oder über das Anschlußmittel AM und das Telekommunikationsnetz zu einem Dienstezentrum des UPT-Dienstes übertragen werden, in dem die PIN überprüft wird. Es ist möglich, die PIN für die Übertragung über das Telekommunikationsnetz zu verschlüsseln.

Im folgenden wird der Vorgang zur Ermöglichung des Zuganges zu dem UPT-Dienst beispielhaft beschrieben. In dem vorliegenden Beispiel möchte der Teilnehmer den Zugang zu dem UPT-Dienst aufbauen, da er über einen fremden Teilnehmeranschluß ein Gespräch mit einem anderen Teilnehmer führen möchte. Dabei sollen die Gebühren für dieses Gespräch über seinen eigenen Teilnehmeranschluß abgerechnet werden. Der Benutzer bringt daher seine Signalisierungsvorrichtung SV, wie bereits oben beschrieben, in die drahtgebundene Verbindung zwischen dem Telefonhörer TH und dem Basisteil TB ein. Der Schalter SA der Signalisierungsvorrichtung SV wird so eingestellt, daß das erste Zugangsmittel DTMF mit dem Anschlußmittel AM verbunden ist, so daß eine DTMF-Signalisierung ermöglicht wird.

Durch ein Abheben des Telefonhörers TH von dem Basisteil TB wird dem Telekommunikationsnetz ein Verbindungswunsch signalisiert. Das Telekommunikationsnetz sendet nun einen Wählton zurück zu dem Telefon, der zu dem Telefonhörer TH weiter geleitet wird.

Die Signalisierungsvorrichtung SV überwacht permanent die durch sie hindurchgeleiteten Signalisierungsinformationen auf durch die Signalisierungsvorrichtung SV interpretierbare Signalisierungsinformationen. Eine solche an die Signalisierungsvorrichtung SV gerichtete Signalisierungsinformation kann beispielsweise ein Anklopfen durch einen anderen Teilnehmer des Telekommunikationsnetzes, eine Gebührenanzeige oder der Wählton sein. Die durch diese Überwachungsfunktion erkannte, an die Signalisierungsvorrichtung SV gerichtete Signalisierungsinformation kann beispielsweise auf dem Display D der Signalisierungsvorrichtung SV angezeigt werden. Insbesondere während eines laufenden Gespräches kann diese Überwachungsfunktion störend sein. Vorteilhafterweise ist daher in der Signalisierungsvorrichtung SV eine Möglichkeit vorhanden, die Überwachungsfunktion abzuschalten. Dieses Abschalten kann entweder von dem Benutzer selbst erfolgen oder aber automatisch über das Telekommunikationsnetz, z.B. nach dem Aufbau der Verbindung, über einen bestimmten Code.

Wurde von der Signalisierungsvorrichtung SV der Wählton erkannt, so wird mit einer automatischen Registrierung begonnen. Dazu ist beispielsweise auf der SIM-Karte eine Adresse des UPT-Dienstzentrums innerhalb des Telekommunikationsnetzes abgespeichert. Diese Adresse wird für den Verbindungsaufbau zu dem UPT-Dienstezentrum verwendet. Dazu sendet die Signalisierungsvorrichtung SV mittels des ersten Zugangsmittels Signalisierungsinformationen in Form von DTMF-Signalen transparent durch das Basisteil TB des Telefones in das Telekommunikationsnetz. Diese DTMF-Signale stellen die Wählinformation dar, um die Verbindung zu dem UPT-Dienstezentrum aufbauen zu können. In dem UPT-Dienstezentrum findet nun eine Registrierung des Benutzers statt. Es ist auch möglich, daß für die Einleitung dieser Registrierung eine Taste der Tastatur TA der Signalisierungsvorrichtung SV entsprechend belegt ist, so daß ein Drücken dieser Taste die Registrierung bewirkt. Das UPT-Dienstezentrum kommuniziert nun mit der Signalisierungsvorrichtung SV und fordert beispielsweise die Eingabe einer PIN für die Identifizierung des Benutzers.

Anschließend wird der UPT-Dienstezentrale signalisiert, daß der Benutzer von dem Telefon einer dritten Person auf seine eigenen Kosten ein Gespräch führen möchte.

Über die Tastatur TA der Signalisierungsvorrichtung SV oder die Tastatur des Telefons kann die Teilnehmernummer des zu erreichenden anderen Teilnehmers eingegeben werden. Es erfolgt dann auf die übliche Weise ein Verbindungsaufbau durch das Telekommunikationsnetz zu dem gewünschten anderen Teilnehmer. Das Display D der Signalisierungsvorrichtung SV kann weiterhin für Aufforderungen an den Benutzer zur Eingabe von Informationen verwendet werden. Beispielsweise ist es möglich, die Handhabung der Signalisierungsvorrichtung SV für die Ermöglichung des Zugangs zu dem Kommunikationsdienst UPT schrittweise in Form eines Menüs auf dem Display D anzuzeigen. Für die erfindungsgemäße Ausführung der Signalisierungsvorrichtung SV ist es vorteilhafterweise nicht notwendig, in der Signalisierungsvorrichtung SV einen Lautsprecher vorzusehen.

Als erfindungsgemäße Signalisierungsvorrichtung kann beispielsweise auch ein Mobilfunktelefon verwendet werden, das ein integriertes Zugangsmittel, wie beispielsweise einen DTMF-Sender, und ein entsprechendes Anschlußmittel zum drahtgebundenen Anschluß des Mobilfunktelefons in die drahtgebundene Verbindung zwischen dem Telefon der dritten Person und dem Telekommunikationsnetz aufweist.

In einer anderen, hier nicht näher beschriebenen Ausführung der erfindungsgemäßen Signalisierungsvorrichtung SV ist es ebenfalls möglich, die Signalisierungsvorrichtung SV so auszugestalten, daß ein Einstecken an den Anschluß TAE parallel zu dem Telefon möglich ist.

## Patentansprüche

1. Tragbare Signalisierungsvorrichtung (SV) für ein Telekommunikationsnetz
- mit wenigstens einem ersten Zugangsmittel (DTMF; PU) zur Ermöglichung eines Zugangs zu einem Kommunikationsdienst für eine personalisierte Kommunikation und
- mit einem Anschlußmittel (AM, S1, S2) zum drahtgebundenen Anschluß der Signalisierungsvorrichtung (SV) in eine drahtgebundene Verbindung zwischen einem aus Telefonhörer (TH) und Basisteil (TB) bestehenden Telefon und einem Anschluß (TAE) für das Telekommunikationsnetz.

2. Signalisierungsvorrichtung nach Anspruch 1, dadurch gekennzeichnet, daß sie ein Kartenlesemittel (KL) zum Lesen einer auf einer Karte abgespeicherten teilnehmerspezifischen Information aufweist.

3. Signalisierungsvorrichtung nach einem der Ansprüche 1 oder 2, dadurch gekennzeichnet, daß das Anschlußmittel (AM, S1, S2) so ausgelegt ist, daß es einen ersten Anschluß der Signalisierungsvorrichtung (SV) zwischen das Basisteil (TB) des Telefons und dem Anschluß (TAE) für das Telekommunikationsnetz ermöglicht.

4. Signalisierungsvorrichtung nach einem der Ansprüche 1 oder 2, dadurch gekennzeichnet, daß das Anschlußmittel (AM, S1, S2) so ausgelegt ist, daß es einen zweiten Anschluß der Signalisierungsvorrichtung (SV) zwischen dem Telefonhörer (TH) und dem Basisteil (TB) des Telefons ermöglicht.

5. Signalisierungsvorrichtung nach einem der Ansprüche 1-4, dadurch gekennzeichnet, daß sie ein erstes Zugangsmittel (DTMF) in Form eines DTMF (Dual-Tone-Multi-Frequency)-Senders aufweist.

6. Signalisierungsvorrichtung nach einem der Ansprüche 1-5, dadurch gekennzeichnet, daß sie ein zweites Zugangsmittel (PU) in Form eines Protokollumsetzers für ein Senden einer Zeichengabe nach dem ISDN (Integrated-Services-Digital-Network)-Standard aufweist.

7. Signalisierungsvorrichtung nach Anspruch 6, dadurch gekennzeichnet, daß sie das erste Zugangsmittel (DTMF), das zweite Zugangsmittel (PU) und ein Schaltmittel (SA) aufweist, um zwischen dem ersten (DTMF) und dem zweiten (PU) Zugangsmittel umschalten zu können.

8. Signalisierungsvorrichtung nach einem der Ansprüche 1-7, dadurch gekennzeichnet, daß sie einen DTMF-Empfänger (DTMF) aufweist.

9. Signalisierungsvorrichtung nach einem der Ansprüche 1-8, dadurch gekennzeichnet, daß sie einen Protokollumsetzer (PU) für ein Empfangen einer Zeichengabe nach dem ISDN-Standard aufweist.

10. Signalisierungsvorrichtung nach einem der Ansprüche 1-9, dadurch gekennzeichnet, daß sie ein Anzeigemittel aufweist.
